# EUROPEAN PATENT APPLICATION

(11) **EP 3 416 348 A1**
(43) Date of publication of application: **19.12.2018**
(21) Application number: 17305715.9
(22) Date of filing: 13.06.2017
(51) Int. Cl.: H04L 29/06

(54) **METHOD FOR MANAGING A LINK BETWEEN TWO USERS**

(71) Applicant: GEMALTO SA, 92190 Meudon (FR)
(72) Inventor: ALICKI, Artur, 13881 GEMENOS CEDEX (FR); OHANIAN, Henri, 13881 GEMENOS CEDEX (FR); MARTIN, Pierre, 13881 GEMENOS Cedex (FR); SIEPRAWSKI, Nicolas, 13881 GEMENOS Cedex (FR)

(57) **Abstract**

The invention is a method for managing a link between first and second users (UA, UB). The first user owns a first private reference (PA) and has a first terminal (TA). The second user owns a second private reference (PB) and has a second terminal (TB). The first terminal shares with the second terminal a first identifier (H[0,1]). The second terminal shares with the first terminal a second identifier (H[0,2]). Both terminals separately compute from said first and second identifiers a common agreement token (HRoot[1,0]) which reflects the link. The first terminal provides a first set comprising the agreement token (HRoot[1,0]), the first identifier (H[0,1]) and the first private reference to a trusted entity (TE) which records said first set. Similarly, the second terminal provides a second set comprising the agreement token (HRoot[1,0]), the second identifier (H[0,2]) and the second private reference (PB) to the trusted entity which records the second set.

## Description

### (Field of the invention)

The present invention relates to methods of managing a link between two users. It relates particularly to methods of declaring and establishing a link between two users through their contact information.

### (Background of the invention)

A user (i.e. an individual) can protect his contact information (e.g. telephone number, e-mail.) by requesting that his contact information not be made available to third parties with whom they share the contact information. For example, a person can request that his telephone number be treated as an unlisted number by a telephone directory service. In such a case the user who requests to have his telephone number unlisted does not provided an indication of who is allowed to contact him via his telephone number through the directory service.

In existing frameworks, when a caller is able to reach a correspondent, the caller can reuse and transmit the contact information of this correspondent to third parties. The correspondent must therefore rely on the caller not to disseminate his contact information to third parties.

There is a need to provide a method and system that protect against unwanted dissemination of user's contact information.

### (Summary of the Invention)

An object of the invention is to solve the above mentioned technical problem.

An object of the present invention is a method for managing a link between first and second users. The first user owns a first private reference and has a first terminal. The second user owns a second private reference and has a second terminal. The first terminal identifies then shares with the second terminal a first identifier. The second terminal identifies then shares with the first terminal a second identifier. Both first and second terminals separately compute from said first and second identifiers a common agreement token which reflects the link. The first terminal provides a first set comprising the agreement token, the first identifier and the first private reference to a trusted entity which records the first set. The second terminal provides a second set comprising the agreement token, the second identifier and the second private reference to the trusted entity which records the second set.

Advantageously, the second user may request a network operator system to establish the link with said first user by providing the network operator system with a group comprising the second private reference, the second identifier, the agreement token and the first identifier. The network operator system may send the group to the trusted entity which may checks both that the first set comprises both the common agreement token and the first identifier and that the second set comprises both the common agreement token), the second identifier and the second private reference. In case of successful checking the trusted entity may retrieve the first private reference from the first set and return the first private reference to the network operator system. The network operator system may launch a step of establishing the link by using both first and second private references and the network operator system may hide the second private reference from the first user and the first private reference from the second user.

Advantageously, the network operator system may include a Telecom network operator and the second private reference may be an identifier of a subscription of said second user to said Telecom network operator.

Advantageously, said first and second identifiers may be generated using a hash algorithm. The agreement token may be computed as an element of a Merkle tree using the hash algorithm and the trusted entity may verify that the agreement token has been computed from both said first and second identifiers by using a Merkle signature scheme. In case of unsuccessful verification, the trusted entity may deny the sending of the first private reference to the network operator system.

Advantageously, a third user may own a third private reference and have a third terminal. The second user may have a fourth terminal. The third terminal may identify then share with the fourth terminal a third identifier. The fourth terminal may identify then share with the third terminal a fourth identifier. Both third and fourth terminals may separately compute a second agreement token by using said third and fourth identifiers. The third terminal may provide a third set comprising the second agreement token, the third identifier and the third private reference to the trusted entity which records the third set. The fourth terminal may provide a fourth set comprising the second agreement token, the fourth identifier and the second private reference to the trusted entity which records the fourth set. The second user may ask the trusted entity to delegate to the third user the link declared between said first and second users. The trusted entity may ask the first user to agree to share the link with the third user. On receipt of agreement of the first user, the trusted entity may compute from both said common agreement token and second agreement token a second level agreement token which reflects the delegation of link between first and third user and record the second level agreement token.

Advantageously, in response to a preset event, the trusted entity may disable the common agreement token to break the link between said first and second users.

Another object of the present invention is a trusted entity comprising both a processor and a storage area and able to communicate with a first terminal of a first user and with a second terminal of a second user. The first user owns a first private reference and said second user owns a second private reference. The trusted entity comprises a software registering agent adapted to be run by the processor for receiving a message from any of said terminals, to extract from the message a set comprising an identifier, one of said private references and a common agreement token which reflects a link between said first and second users and to record said set in the storage area.

Advantageously, the trusted entity may be able to communicate with a network operator system. The trusted entity may comprise a searching agent adapted to be run by the processor for receiving a request from the network operator system, for extracting from the request a common agreement token, first and second identifiers and a first private reference. The searching agent may be adapted to check that the storage area contains a first set comprising both the common agreement token, the first identifier and the first private reference, and to check that the storage area contains a second set comprising both the common agreement token and the second identifier. In case of successful checking, the searching agent may be configured to retrieve a second private reference from the second set and to return the second private reference to the network operator system.

Advantageously, the searching agent may be adapted to be run by the processor for verifying that the agreement token has been computed from both said first and second identifiers by using a Merkle signature scheme and, in case of unsuccessful verification, to refuse return of the second private reference to the network operator system.

Advantageously, the storage area may comprise a third set storing a second agreement token which reflects a link between a third user and the second users. The trusted entity may comprise a delegation agent adapted to be run by the processor for asking said first user to agree to share said link with the third user. On receipt of agreement of the first user, the delegation agent may be adapted to compute a delegation agreement token from both agreement tokens and by using a Merkle signature scheme, the delegation agreement token reflecting a link between said first and third users.

Advantageously, the trusted entity may comprise a revoking agent adapted to be run by the processor for, in response to a preset event, disabling the common agreement token to break the link between said first and second users.

Another object of the invention is a network operator system comprising a processor and able to communicate with a trusted entity, with a first terminal of a first user and with a second terminal of a second user. The first user owns a first private reference and said second user owns a second private reference. The network operator system comprises a software secure agent adapted to be run by the processor for getting from the first terminal a common agreement token, first and second identifiers and a first private reference. The secure agent is adapted to generate a request comprising said common agreement token, said first and second identifiers and the first private reference, and to send the request to the trusted entity. The secure agent is configured to retrieve a second private reference returned by the trusted entity and to launch a step of link establishment between said first and second users by using both said first and second private references. The secure agent is configured to hide the second private reference from the first user and to hide the first private reference from the second user.

Another object of the invention is a first terminal comprising a processor and able to communicate with both a trusted entity and a second terminal. The first terminal is allocated to a first user owning a first private reference. The second terminal is allocated to a second user owning a second private reference. The terminal comprises a declaring agent adapted to be run by the processor for identifying then sharing with the second terminal a first identifier, for receiving a second identifier from said second terminal. The declaring agent is adapted to compute from said first and second identifiers a common agreement token which reflects a link between said first and second users. The declaring agent is adapted to generate and send to the trusted entity a set comprising the first identifier, the common agreement token and the first private reference.

Advantageously, the first terminal may be able to communicate with a network operator system. The first terminal may comprise a connecting agent adapted to be run by the processor for providing the network operator system with a group comprising said first and second identifiers, the common agreement token and the first private reference to request establishment of the link.

### (Brief description of the drawings)

Other characteristics and advantages of the present invention will emerge more clearly from a reading of the following description of a number of preferred embodiments of the invention with reference to the corresponding accompanying drawings in which:
- Figure 1 shows a flow diagram of a declaration of a link between users according to an example of the invention,
- Figure 2 shows a flow diagram of establishment of a link between users according to an example of the invention,
- Figure 3 shows a flow diagram of a delegation of link between users according to an example of the invention,
- Figure 4, 6 and 7 depict schematically the content of a trusted database storing elements related to link between users according to as many examples of the invention,
- Figures 5 and 8 depict schematically dependencies between the different elements stored in the trusted database according to several examples of the invention,
- Figure 9 depicts schematically an example of architecture of a trusted entity according to the invention, and
- Figure 10 shows a sequence of establishment of a link between users according to an example of the invention.

### (Detailed description of the preferred embodiments)

The invention may apply to any type of contact information of a user. In particular, the contact information may be a telephone number, an e-mail address or a Uniform Resource Identifier (URI) like an URL. The contact information may also be financial transaction reference like a bank account number. The user may be an individual, a computer, a machine or a communication equipment.

The user terminal may be a phone, a tablet PC, a computer, a smart watch, a gaming console, etc.

In the above-described embodiments, the user is assumed to acts through a personal terminal. (i.e. a terminal containing the private reference of the user.)

The invention relies in particular on the use of a pair formed by a user's private reference and a user's identifier. The user's contact information is considered as the user's private reference. The user's identifier is transmitted to another user while the private reference is never known by other users.

Thanks to the invention, transmission of the user's identifier to a third party without the agreement of its owner does not compromise the fact that the user cannot be contacted in an inappropriate manner.

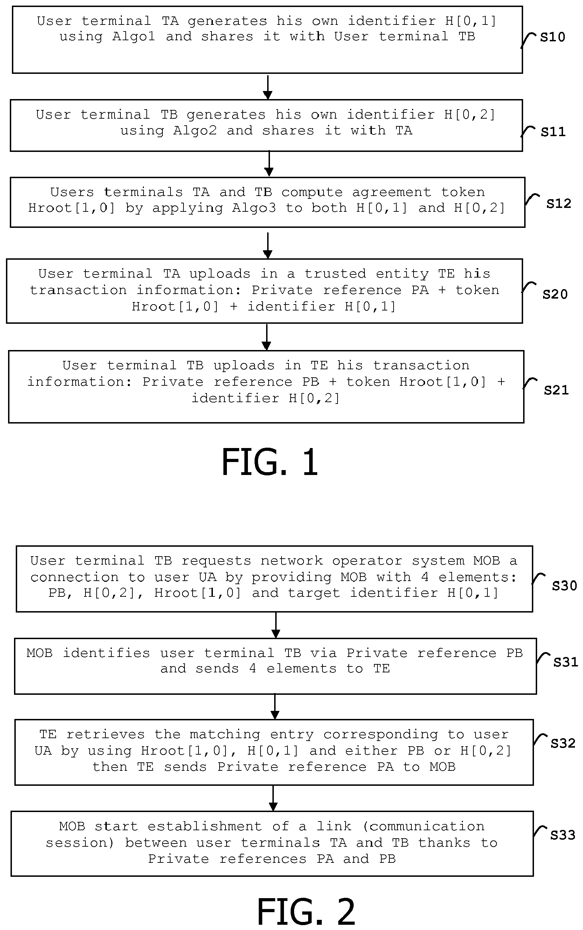

**Figure 1** shows a flow diagram of declaration of a link between two users according to an example of the invention.

User UA uses terminal TA and user UB uses terminal TB. In this example, users UA and UB are two individuals which agree to share their personal contact information with each other. The personal contact information of user UA is also named private reference PA and the personal contact information of user UB is also named private reference PB. In this example, the private references are phone numbers.

Each user has his own terminal which can be a smart phone for instance.

The method shown at Figure 1 includes two phases: a handshake phase and a registering phase.

The handshake phase starts at step S10. At step S10, the terminal TA of the user UA generates an identifier H[0,1] of user UA by running an algorithm Algol. For instance the algorithm Algo1 can be a random-number generator, a pseudorandom number generator or a cryptographically secure random number generator. The algorithm is selected so that each generated identifier has a unique value. For instance, SHA-2 or SHA-3 algorithm families can be used. The length of the identifiers is selected according to the number of elements to be referenced. The length (i.e. size) of the identifiers can be 256 bits, 512 bits or 1024 bits for instance.

Then the terminal TA sends the generated identifier H[0,1] to the terminal TB of the user UB. This sharing can be done through any appropriate communication protocol. For instance, terminals TA and TB may communicate through Near Field Communication (NFC) or Bluetooth Low Energy ©. In a variant, the generated identifier may be displayed as a QR-code and flashed by the other terminal.

At step S11, the terminal TB of the user UB generates a public identifier H[0,2] of user UB by running an algorithm Algo2 and sends it to the terminal TA through any relevant communication protocol.

Steps S10 and S11 can be executed sequentially or partly simultaneously. Preferably, algorithms Algo1 and Algo2 are the same.

It is to be noted that the identifier H[0,1] allows the user UB to identify user UA, while the identifier H[0,2] allows the user UA to identify user UB.

Then at step S12, the terminals TA and TB compute separately (each on its own side) an agreement token Hroot[1,0] by applying the same function (Algorithm Algo3) to the same input parameters: identifiers H[0,1] and H[0,2]. It is assumed that both terminals TA and TB separately compute the same agreement token Hroot[1,0].

Preferably, algorithm Algo3 is based on the Merkle signature scheme so that the agreement token Hroot[1,0] and the identifiers H[0,1] and H[0,2] belong to the same Merkle tree.

Algorithm Algo3 can also be a hash function like any variant of the SHA (Secure Hash Algorithm) for example.

In one embodiment, algorithms Algol, Algo2 and Algo3 can be the same.

During the handshake phase, the sharing of data can be performed via many ways. For example, the sharing can be carried out through a NFC tap between two terminals. In another example, the sharing can be performed through social networks or web stores. In another example, the sharing can be trigged by the entry of a terminal in a specific geographic area, like a store. In this case, the data can be exchanged with a terminal allocated to the specific geographic area.

The identifiers can also be exchanged through Wi-Fi ©, Li-Fi ©, Bluetooth © or Bluetooth Low Energy for instance.

The registering phase is performed after the handshake phase. The registering phase starts at step S20: the terminal TA uploads in a trusted entity TE his transaction information which includes his private reference PA, his generated identifier H[0,1] and the computed agreement token Hroot[1,0].

The trusted entity TE is a machine comprising a storage area (preferably a secure storage area) and which is trusted by both users UA and UB. The trusted entity TE can be reachable through Internet, through an Over-The-Air (OTA) Telecom session, or any relevant communication protocol.

The trusted entity TE registers the transaction information received from the terminal TA in its storage area.

At step S21: the terminal TB uploads in the trusted entity TE his transaction information which includes his private reference PB, his generated identifier H[0,2] and the computed agreement token Hroot[1,0]. The trusted entity TE registers the transaction information received from the terminal TB in its storage area.

It is to be noted that both steps S20 and S21 can be executed sequentially or in parallel.

Preferably, the terminal TA of the user UA stores the private reference PA, the computed agreement token Hroot[1,0] and the identifiers H[0,1] and H[0,2] for future use.

The agreement token Hroot[1,0] reflects a mutual agreement between users UA and UB for declaring a link between users UA and UB.

The storing in the trusted entity TE of the pair of transaction information coming from terminals TA and TB reflects the declaration of the link between users UA and UB.

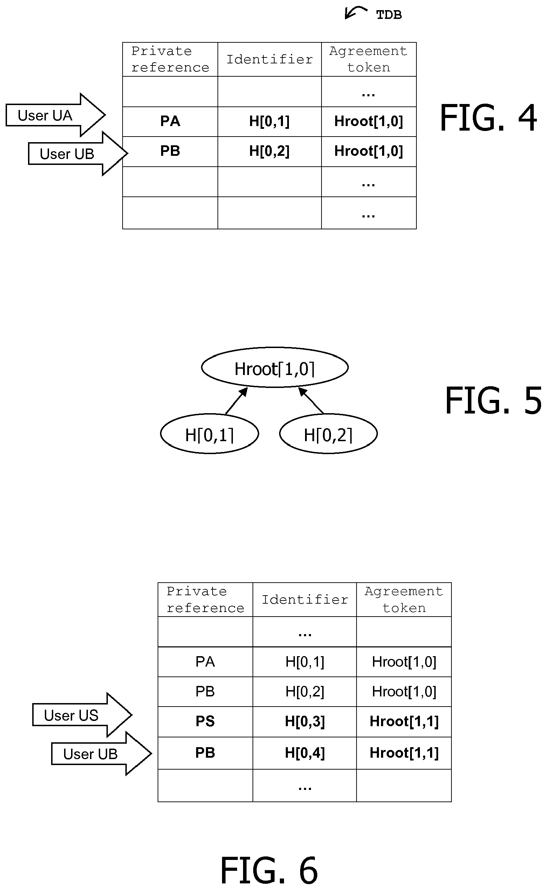

**Figure 4** shows schematically an extract of the content of a trusted database TDB of the trusted entity TE according to an example of the invention.

The trusted entity TE includes a storage area intended to store elements related to link(s) between users. Preferably, the storage area is a secure storage area named trusted database TDB.

The example of Figure 4 shows a part of the content of a trusted database TDB at the end of the step S21 of Figure 1.

The trusted database TDB contains one entry corresponding to the user UA. This entry comprises the Private reference PA of user UA, the identifier H[0,1] of user UA and the agreement token Hroot[1,0] reflecting the agreement with user UB.

The trusted database TDB contains another entry corresponding to the user UB. This second entry comprises the Private reference PB of user UB, the identifier H[0,2] of user UB and the agreement token Hroot[1,0] reflecting the agreement between users UA and UB.

**Figure 5** shows schematically dependencies between the user identifiers and the agreement token stored in the trusted database TDB according to an example of the invention.

In this embodiment, the agreement token Hroot[1,0] is assumed to have been computed from identifiers H[0,1] and H[0,2] using the Merkle signature scheme.

In this case, the agreement token Hroot[1,0] has been computed from its two child nodes: identifier H[0,1] and identifier H[0,2]. Thanks to mathematical properties of the Merkle signature scheme, the trusted entity TE can check that a father node has been computed from its child nodes.

**Figure 2** shows a flow diagram of establishment of the link between users UA and UB according to an example of the invention.

Once the link between users UA and UB has been declared to the trusted entity TE, one of these users can request the establishment of the link between the users UA and UB.

Users UA and UB are assumed to each have a subscription to a network operator system MOB.

At step S30, the user UB requests a network operator system MOB a connection to user UA by providing the network operator system MOB with a package including four elements: his Private reference PB, his identifier H[0,2], the agreement token Hroot[1,0] and the identifier H[0,1] (also named target identifier) of the targeted user. In practice, the user terminal TB requests the network operator system MOB a connection to user terminal TA.

Preferably, the network operator system MOB identifies by itself the Private reference PB of the user UB which requests the link establishment. Thus, a user cannot unduly borrow the private reference of another user vis-à-vis the network operator system MOB. For instance, when the network operator system MOB is a mobile network operator, it can identify the calling user thanks to the credentials (linked to a subscription) used to connect the Telecom network. In other words, the user terminal TB can provide the network operator system MOB with the private reference PB either by sending the private reference PB to the network operator system MOB or by using subscription credentials which allow the network operator system MOB to deduce the private reference PB.

It is to be noted that the user UB knows the user UA under the identifier H[0,1]. In other words, the terminal TB does not hold the private reference PA of user UA.

At step S31, the network operator system MOB identifies the terminal TB via the retrieved Private reference PB. Preferably, the network operator system MOB checks that the terminal TB is authorized to communicate through the network of the network operator system MOB. Then the network operator system MOB forwards to the trusted entity TE a data group including four elements: the private reference of the requestor (i.e. Private reference PB), the identifier H[0,2] of the requestor, the agreement token Hroot[1,0] and the target identifier H[0,1].

At step S32, the trusted entity TE retrieves the relevant entry corresponding to user UA by using the target identifier H[0,1] and the agreement token Hroot[1,0].

The trusted entity TE also retrieves the relevant entry corresponding to requestor user (user UB) by using the agreement token Hroot[1,0] and either private reference PB of the requestor or the identifier H[0,2] of the requestor. If the trusted entity TE succeeded to retrieve both matching entries, it sends the private reference PA to the network operator system MOB. Else, the trusted entity TE can return an error message to the network operator system MOB or take any appropriate action.

Advantageously, the trusted entity TE may also check that both identifiers H[0,1] and H[0,2] are linked to the agreement token Hroot[1,0] by a preset mathematical function. For instance, the trusted entity TE may check that the agreement token Hroot[1,0] and both identifiers H[0,1] and H[0,2] belong to the same Merkle tree. More precisely, the trusted entity TE may check that the agreement token Hroot[1,0] has been generated from both identifiers H[0,1] and H[0,2] using the Merkle signature scheme. In case of unsuccessful checking, the trusted entity TE does not provide the network operator system MOB with the Private reference PA of the target user.

At step S33, assuming that the network operator system MOB received the Private reference PA, the network operator system MOB starts establishment of the link between users UA and UB (between terminals TA and TB) thanks to private references PA and PB. Thus a communication link is now established between users UA and UB through the terminals TA and TB.

The network operator system MOB takes care to hide the private reference PB to the terminal TA (i.e. to user UA) and to hide the private reference PA to the terminal TB (i.e. to user UB). For instance, hiding private references can be implemented by a clearing (erasure) of the private reference presented to the other terminal. Hiding may also be implemented by replacing the private references by temporary references.

It is to be noted that the network operator system MOB establishes the link between terminals TA and TB by using private references PA and PB for identifying user UA, respectively user UB. The network operator system MOB cannot identify users UA and UB if it does not have the two private references PA and PB.

In this example, the link is a telecom communication session.

It is to be noted that if user UB voluntarily provides a third party with the contact information (i.e. identifier H[0,1]) related to user UA, the third party cannot contact user UA. The same is true if a third party retrieves (from user UB or terminal TB) the contact information related to user UA by means of an attack.

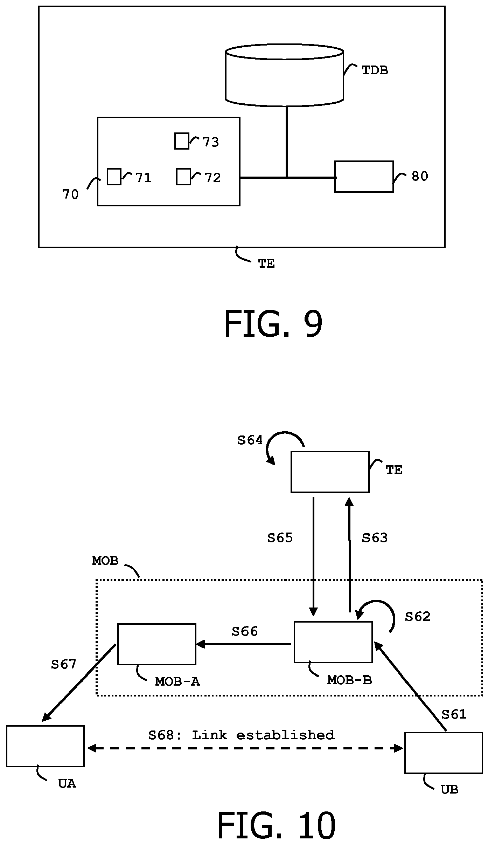

**Figure 10** shows a sequence of establishment of a link between users UA and UB according to an embodiment of the invention.

In this embodiment, the network operator system MOB includes two network operators MOB-A and MOB-B. The user UA is assumed to have a subscription (or to be registered) to the network operator MOB-A, while the user UB is assumed to have a subscription (or to be registered) to the network operator MOB-B. For instance, network operators MOB-A and MOB-B can be two distinct Mobile Network operators.

At step S61, at the initiative of the user UB, the terminal TB requests the network operator MOB-B a connection to user UA (terminal TA) by sending a package including four elements described at Figure 2.

At step S62, the network operator MOB-B identifies the user UB thanks to the received Private reference PB. At step S63, the network operator MOB-B forwards to the trusted entity TE the data group as described at Figure 2.

At step S64, the trusted entity TE retrieves the relevant entries corresponding to users UA and UB as explained at Figure 2.

If the trusted entity TE succeeded to retrieve both matching entries, it returns the Private reference PA to the network operator MOB-B at step S65.

At step S66, the network operator MOB-B sends to MOB-A a request to establish a communication link between users UA and UB thanks to Private references PA and PB. At step S67, thanks to the received Private reference PA, the network operator MOB-A contacts the user UA (through the terminal TA) for establishing the link.

At step S68 the communication link is established between terminals TA and TB. Hence, users UA and UB can now exchange data or have a call through the communication link. Thus the link is established between users UA and UB.

It is to be noted that, in the example of Figure 10, the private reference PA does not exit from the zone constituted by the triplet: trusted entity TE, network operator system MOB and terminal of user UA.

If needed, the user UA can authorize the transfer (or duplication) of the private reference PA (with the agreement token Hroot[1,0] and the identifiers H[0,1] and H[0,2]) to another terminal he controls. Hence, the declaration of the link can be executed from a smartphone of user UA and the establishment of the link with user UB can be done through a tablet PC controlled by user UA.

It is to be noted that according to the above-presented embodiments of the invention, the trusted entity TE does not need to contain any data directly linked to a user terminal. (i.e. no terminal-specific data)

In another embodiment (not shown), the link can be a payment transaction in which an amount of money is transferred from the account of a user to the account of another user. In this case, the private reference can be the bank account number. A handshake phase and a registering phase can be run in ways similar to those of Figure 1. The network operator system MOB is a bank or an inter-bank group which allows performing payment between two users which have a subscription to the network operator system MOB. When a money transfer is needed, a user can send a request to send an amount of money to a target user. On receipt of this request, the network operator system MOB retrieves the account number of the target user.

Hence, a debit authorization for a third party can be declared then taken into account by the bank of the user.

In another embodiment, the system according to the invention may allow to register authorizations given by an owner of a vehicle for car sharing.

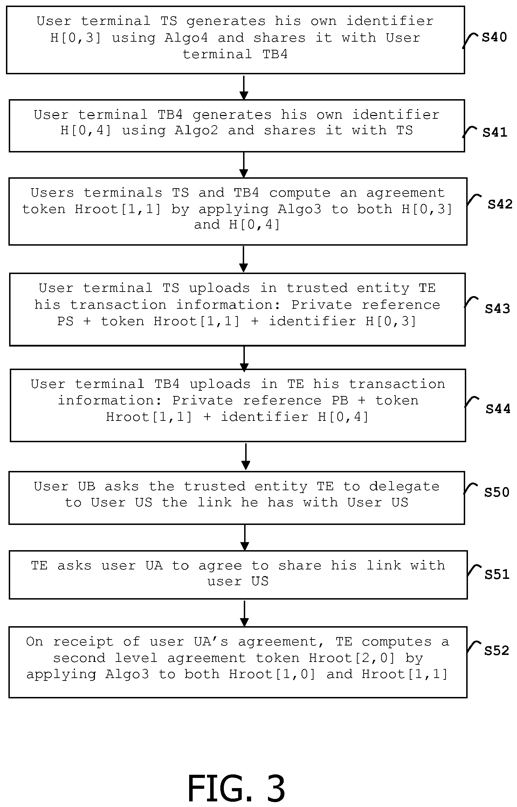

**Figure 3** shows a flow diagram of delegation of link between users according to an example of the invention.

In this example a third user US is a person who has personal contact information (private reference) PS and a terminal TS which is a smart phone.

Users UB and US agree to share their phone numbers with each other. More precisely, they agree to share the right to join (and to be joined by) the other user through their private reference.

The method shown at Figure 3 includes three phases: a handshake phase, a registering phase and a delegation phase.

The handshake and registering phases are similar to the corresponding phases of Figure 1.

Steps S40-S44 of Figure 3 are similar to the steps S10-S21 of Figure 1 with the following specificities.

At step S40, the terminal TS generates a new identifier H[0,3] of user US by running an algorithm Algo4 and sent it to the terminal TB4 of user UB. At step S41, the terminal TB4 generates a new identifier H[0,4] of user UB by running an algorithm Algo2 and sent it to the terminal TS of user US.

At step S42, the terminals TS and TB4 compute separately an second agreement token Hroot[1,1] by applying the same function (Algorithm Algo3) to the same input parameters: identifiers H[0,3] and H[0,4].

At step S43, the terminal TS sends to the trusted entity TE its transaction information which includes his private reference PS, his generated identifier H[0,3] and the second agreement token Hoot[1,1]. The trusted entity TE registers the transaction information received from the terminal TS in its secure storage area.

At step S44, the terminal TB4 uploads in the trusted entity TE its transaction information which includes his private reference PB, his new generated identifier H[0,4] and the second agreement token Hroot[1,1]. The trusted entity TE registers the transaction information received from the terminal TB4 in its secure storage area.

At this point, the secure storage area comprises four entries as shown at **Figure 6****.** It is to be noted that the user UB can now establish a link with users UA and US. But users US and UA cannot establish a link between them.

At step S50, the user UB asks the trusted entity TE to delegate to user US the link which is declared between users UB and UA. For instance, the terminal TB4 can send a specific message to the trusted entity TE.

On receipt of this specific message, the trusted entity TE asks the user UA to agree to share his declared link with user US at step S51. For instance, the trusted entity TE can send a delegation request to the terminal TA. Depending on the channel available for joining the terminal TA, the delegation request may be sent as a HTTP request or a SMS for example. The trusted entity TE can use the private reference PA to define the target of the delegation request.

It is to be noted that the private reference PA can include several contact information like a phone number, an e-mail address or an URL.

On receipt of agreement from user UA (via the terminal TA), the trusted entity TE computes a second level agreement token Hroot[2,0] by running the algorithm Algo3 with agreement tokens Hroot[1,0] and Hroot[1,1] as input parameters at step S52. The trusted entity TE stores the second level agreement token Hroot[2,0] in its secure storage area to reflect the new link declared between users UA and US.

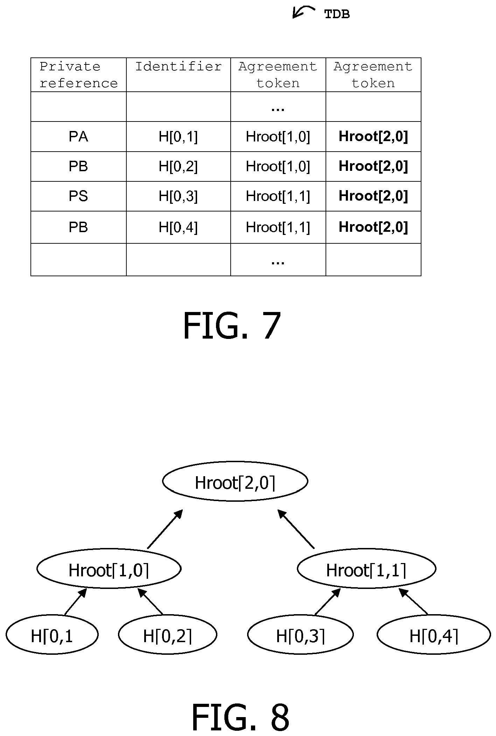

At this point, the secure storage area may comprise four entries updated with the second level agreement token Hroot[2,0] as shown at **Figure 7****.** Alternatively, the storage of the second level agreement token Hroot[2,0] may be implemented in a different way into the secure storage area of the trusted entity TE. It is to be noted that the user US can now establish a link with user UA.

**Figure 8** shows schematically dependencies between the user identifiers and agreement tokens stored in the trusted database TDB. Figure 8 corresponds to the state of the secure area storage described at Figure 7.

In this embodiment, each father node of the tree is assumed to have been computed from its direct child nodes using the Merkle signature scheme. Thus the second level agreement token Hroot[2,0] has been computed from both agreement tokens Hroot[1,0] and Hroot[1,1] using the Merkle signature scheme. Thanks to mathematical properties of the Merkle signature scheme, the trusted entity TE can check that two leaf nodes share a common higher-level node. The fact that two leaf nodes share a common higher-level node reflect the declaration of a link between the users corresponding to the two leaf nodes.

From this point, user US may successfully request the establishment of a communication link with user UA in a way similar to the method of Figure 2.

It is to be noted that before running step S52 of Figure 3, the trusted entity may also ask the user US to agree to share his declared link with user UA (in addition to the agreement of user UA).

It is to be noted the delegation requested by user UB for creating a link between users UA and US does not involve a transfer of data between users UB and US.

In the example of Figure 3, user UB uses a terminal TB4 which may be a smartphone, a PDA or a tablet PC for instance. Advantageously, the terminal TB4 of Figure 3 can be the same as the terminal TB of Figure 1.

The delegation mechanism is well-suited for the use case of a purchase in a store followed by a delivery to the buyer's home. In this case, a first link can be declared between the buyer and the store. Then a second link can be declared between the buyer and a delivery company usually working for the store. This second link can be created thanks to the link delegation. The second link is generally declared with a reduced validity period.

**Figure 9** shows schematically a configuration of a trusted entity TE according to an example of the invention.

In this embodiment, the trusted entity TE is a computer server machine which comprises a secure storage area TDB, a non-volatile memory 70 and a processor 80. The trusted entity TE is able to communicate with the network operator system MOB through any relevant communication protocol. For example it may exchange HTTP requests through the Internet or private networks.

The trusted entity TE is able to communicate with the user terminals through a HTTP request or a SMS/MMS for example.

The trusted entity TE comprises a software searching agent 72 configured to be run by the processor 80 for receiving a request from the network operator system MOB, for extracting from the request a common agreement token a requestor identifier, a target identifier and a requestor private reference. The software searching agent 72 is also configured to check both that the secure storage area TDB contains an entry (i.e. a set) comprising both the common agreement token, the requestor identifier and the requestor private reference and that the secure storage area TDB contains another entry (i.e. set) comprising both the common agreement token and the target identifier. In case of successful checking, the searching agent 72 is configured to retrieve the target private reference from the second set and to return the target private reference to the network operator system.

Preferably, the searching agent 72 is configured to be run by the processor 80 for verifying that an agreement token has been computed from a target identifier and a requestor identifier using the Merkle signature scheme and, in case of unsuccessful verification, to refuse sending of a target private reference to the network operator system MOB.

In the example of Figure 9, the trusted entity TE also comprises a software delegation agent 71 which is configured to be run by the processor 80 for asking a target user to agree to share with another user a declared link. On receipt of agreement of the target user, the delegation agent 71 is configured to compute a delegation agreement token as a root of a Merkle tree by using existing agreement token. In this case, the delegation agreement token reflects a mutual agreement between two users which are already involved in links registered in the trusted entity TE. The delegation agreement token is an upper-level agreement token based on two pre-registered agreement tokens.

In the example of Figure 9, the trusted entity TE also comprises a software revoking agent 73 which is configured to be run by the processor 80 for disabling a common agreement token in order to break the link declared between two users in response to a preset event.

The revoking agent 73 can be configured to consider an expiration date of the declared link to trigger the revocation of the link. Such expiration date can be defined at the time of the declaration/delegation of the link.

The revoking agent 73 can be configured to consider an explicit request coming from a user to trigger the revocation of the link in which this user is involved. In a first variant, the user's terminal can request to remove the user from the trusted entity TE. In this case, all links previously available for the user are deactivated (temporary) or deleted (for good).

In a second variant, the user's terminal can send a revoking command for a targeted link. In this case, the trusted entity is assumed to have generated a revoking code at the time of the declaration/delegation of the link. Then the user's terminal send a revoking command comprising the revoking code for asking for the link disabling/removal. The revoking code can be a value randomly generated or computed as a hash of data stored in the trusted entity TE.

The trusted entity TE can rely on private reference, identifier and/or agreement token to authenticate the user which sent a revoking command.

Starting from the example of Figure 7, if a revocation of the link between users UA and US is requested, the revoking agent 73 can delete or disable the second level agreement token Hroot[2,0] (i.e. delegation token reflecting the link between users UA and US). Other arrangements may be implemented according to well-known database management rules.

Preferably, the network operator system MOB comprises a processor and a secure agent adapted to be run by the processor for getting from a user terminal a data pack including a common agreement token, a target identifier and a requestor (initiator) identifier and a private reference of the requestor user. The secure agent is adapted to generate a request comprising the received data pack and to send the request to the trusted entity TE. The secure agent is configured to retrieve a target private reference which is returned by the trusted entity TE. The secure agent is configured to launch a step of link establishment between the requestor (initiator) terminal and the target terminal by using both the private reference of the initiator user and the target private reference. The secure agent is configured to hide the target private reference from the initiator terminal and conversely.

A user terminal comprises a processor and is able to communicate with both the trusted entity TE and at least another user terminal. Each terminal is assume to be allocated to one user owning his private reference.

The terminal comprises a software declaring agent adapted to be run by the processor for identifying then sharing with another terminal a first identifier and for receiving a second identifier from another terminal. The declaring agent is adapted to compute from said first and second identifiers a common agreement token which reflects a link between said two users. The declaring agent is adapted to generate and send to the trusted entity a set comprising the first identifier, the common agreement token and his own private reference.

The terminal is able to communicate with the network operator system and comprises a connecting agent which is configured to be run by the processor for sending to the network operator system MOB a group comprising a target identifier, a requestor identifier, a common agreement token and the private reference of the requestor user to request establishment of link between two terminals.

Although not described in detail, the communications between the various actors are preferably secured by conventional means of managing the confidentiality.

The invention allows to keep secret the user private reference. Parts of user contact information which are shared with other users cannot be used by unwanted uses or outside the pair consisting of the network operator system and the trusted entity.

The invention is well-suited for managing telephone numbers, e-mail addresses, and bank account number.

The invention is not limited to the described embodiments or examples. In particular, a user can be a computer machine which cooperates with a terminal or which acts as both user and user terminal.

## Claims

1. A **method** for managing a link between first and second users (UA, UB), said first user (UA) owning a first private reference (PA) and having a first terminal (TA), said second user (UB) owning a second private reference (PB) and having a second terminal (TB),
**characterized in that** said first terminal (TA) identifies then shares with the second terminal (TB) a first identifier (H[0,1]), **in that** said second terminal (TB) identifies then shares with the first terminal (TA) a second identifier (H[0,2]), **in that** both first and second terminals (TA, TB) separately compute from said first and second identifiers (H[0,1], H[0,2]) a common agreement token (HRoot[1,0]) which reflects said link, **in that** said first terminal (TA) provides a first set comprising said agreement token (HRoot[1,0]), said first identifier (H[0,1]) and said first private reference (PA) to a trusted entity (TE) which records said first set and **in that** said second terminal (TB) provides a second set comprising said agreement token (HRoot[1,0]), said second identifier (H[0,2]) and said second private reference (PB) to the trusted entity (TE) which records said second set.

2. The method according to claim 1, wherein the second user (UB) requests a network operator system (MOB) to establish the link with said first user (UA) by providing the network operator system (MOB) with a group comprising the second private reference (PB), the second identifier (H[0,2]), the agreement token (Hroot[1,0]) and the first identifier (H[0,1]), wherein the network operator system (MOB) sends the group to the trusted entity (TE), wherein the trusted entity (TE) checks both that the first set comprises both the common agreement token (HRoot[1,0]) and the first identifier (H[0,1]) and that the second set comprises both the common agreement token (HRoot[1,0]), the second identifier (H[0,2]) and the second private reference (PB), wherein in case of successful checking the trusted entity (TE) retrieves the first private reference (PA) from the first set and returns the first private reference (PA) to the network operator system (MOB), wherein the network operator system (MOB) launches a step of establishing said link by using both said first and second private references (PA, PB) and wherein the network operator system (MOB) hides the second private reference (PB) from the first user (UA) and hides the first private reference (PA) from the second user (UB).

3. The method according to claim 2, wherein the network operator system (MOB) includes a Telecom network operator and wherein said second private reference (PB) is an identifier of a subscription of said second user (UB) to said Telecom network operator.

4. The method according to claim 2, wherein said first and second identifiers (H[0,1], H[0,2]) are generated using a hash algorithm, wherein said agreement token (HRoot[1,0]) is computed as an element of a Merkle tree using said hash algorithm and wherein the trusted entity (TE) verifies that the agreement token (HRoot[1,0]) has been computed from both said first and second identifiers (H[0,1], H[0,2]) by using a Merkle signature scheme and, in case of unsuccessful verification, denies the sending of the first private reference (PA) to the network operator system (MOB).

5. The method according to claim 1, wherein a third user (US) owns a third private reference (PS) and has a third terminal (TS), wherein said second user (UB) has a fourth terminal (TB4), wherein said third terminal (TS) identifies then shares with the fourth terminal (TB4) a third identifier (H[0,3]), wherein said fourth terminal (TB4) identifies then shares with the third terminal (TS) a fourth identifier (H[0,4]), wherein both third and fourth terminals (TS, TB4) separately compute a second agreement token (HRoot[1,1]) by using said third and fourth identifiers (H[0,3], H[0,4]), wherein said third terminal (TS) provides a third set comprising said second agreement token (HRoot[1,1]), said third identifier (H[0,3]) and said third private reference (PS) to the trusted entity (TE) which records said third set wherein said fourth terminal (TB4) provides a fourth set comprising said second agreement token (HRoot[1,1]), said fourth identifier (H[0,4]) and said second private reference (PB) to the trusted entity (TE) which records said fourth set, wherein the second user (UB) asks the trusted entity (TE) to delegate to said third user (US) said link declared between said first and second users (UA, UB), wherein the trusted entity (TE) asks said first user (UA) to agree to share said link with the third user (US) and wherein, on receipt of agreement of the first user (UA), the trusted entity (TE) computes from both said common agreement token (HRoot[1,0]) and second agreement token (HRoot[1,1]) a second level agreement token (HRoot[2,0]) which reflects the delegation of link between first and third user (UA, US) and records the second level agreement token (HRoot[2,0]).

6. The method according to claim 1, wherein in response to a preset event, the trusted entity (TE) disables the common agreement token (HRoot[1,0]) to break the link between said first and second users (UA, UB).

7. A **trusted entity** (TE) comprising a processor (80) and a storage area (TDB) and able to communicate with a first terminal (TA) of a first user (UA) and with a second terminal (TB) of a second user (UB), said first user (UA) owning a first private reference (PA) and said second user (UB) owning a second private reference (PB), **characterized in that** said trusted entity (TE) comprises a software registering agent (72) adapted to be run by the processor (80) for receiving a message from any of said terminals (TA, TB), to extract from the message a set comprising an identifier (H[0,1], H[0,2]), one of said private references (PA, PB) and a common agreement token (HRoot[1,0]) which reflects a link between said first and second users (UA, UB) and to record said set in the storage area (TDB).

8. A trusted entity (TE) according to claim 7, wherein said trusted entity (TE) is able to communicate with a network operator system (MOB), wherein said trusted entity (TE) comprises a searching agent (72) adapted to be run by the processor (80) for receiving a request from the network operator system (MOB), for extracting from the request a common agreement token (HRoot[1,0]), first and second identifiers (H[0,1], H[0,2]) and a first private reference (PA), and for checking that the storage area (TDB) contains a first set comprising both the common agreement token (HRoot[1,0]), the first identifier (H[0,1]) and the first private reference (PA) and that the storage area (TDB) contains a second set comprising both the common agreement token (HRoot[1,0]) and the second identifier (H[0,2]) and, in case of successful checking, the searching agent (72) is configured to retrieve a second private reference (PB) from the second set and to return the second private reference (PB) to the network operator system (MOB).

9. The trusted entity (TE) according to claim 8, wherein the searching agent (72) is adapted to be run by the processor (80) for verifying that the agreement token (HRoot[1,0]) has been computed from both said first and second identifiers (H[0,1], H[0,2]) by using a Merkle signature scheme and, in case of unsuccessful verification, to refuse return of the second private reference (PB) to the network operator system (MOB).

10. The trusted entity (TE) according to claim 9, wherein the storage area (TDB) comprises a third set storing a second agreement token (HRoot[1,1]) which reflects a link between a third user (US) and said second users (UB), wherein said trusted entity (TE) comprises a delegation agent (71) adapted to be run by the processor (80) for asking said first user (UA) to agree to share said link with the third user (US), wherein, on receipt of agreement of the first user (UA), the delegation agent (71) is adapted to compute a delegation agreement token (HRoot[2,0]) from both agreement tokens (HRoot[1,0]) and (HRoot[1,1]) by using a Merkle signature scheme, said delegation agreement token (HRoot[2,0]) reflecting a link between said first and third users (UA, US).

11. The trusted entity (TE) according to claim 8, wherein said trusted entity (TE) comprises a revoking agent (73) adapted to be run by the processor (80) for, in response to a preset event, disabling the common agreement token (HRoot[1,0]) to break the link between said first and second users (UA, UB).

12. A **network operator system** (MOB) comprising a processor and able to communicate with a trusted entity (TE), with a first terminal (TA) of a first user (UA) and with a second terminal (TB) of a second user (UB), said first user (UA) owning a first private reference (PA) and said second user (UB) owning a second private reference (PB),
**characterized in that** the network operator system (MOB) comprises a software secure agent adapted to be run by the processor for getting from the first terminal (TA) a common agreement token (HRoot[1,0]), first and second identifiers (H[0,1], H[0,2]) and a first private reference (PA), **in that** the secure agent is adapted to generate a request comprising said common agreement token (HRoot[1,0]), said first and second identifiers (H[0,1], H[0,2]) and said first private reference (PA), and to send the request to the trusted entity (TE), **in that** the secure agent is configured to retrieve a second private reference (PB) returned by the trusted entity (TE), **in that** the secure agent is configured to launch a step of link establishment between said first and second users (UA, UB) by using both said first and second private references (PA, PB) and **in that** the secure agent is configured to hide the second private reference (PB) from the first user (UA) and to hide the first private reference (PA) from the second user (UB).

13. A **first terminal** (TA) comprising a processor and able to communicate with a trusted entity (TE) and a second terminal (TB), said first terminal (TA) being allocated to a first user (UA) owning a first private reference (PA), said second terminal (TB) being allocated to a second user (UB) owning a second private reference (PB),
**characterized in that** the terminal (TA) comprises a declaring agent adapted to be run by the processor for identifying then sharing with the second terminal (TB) a first identifier (H[0,1]), for receiving a second identifier (H[0,2]) from said second terminal (TB), **in that** said declaring agent is adapted to compute from said first and second identifiers (H[0,1], H[0,2]) a common agreement token (HRoot[1,0]) which reflects a link between said first and second users (UA, UB) and **in that** said declaring agent is adapted to generate and send to the trusted entity (TE) a set comprising said first identifier (H[0,1]), said common agreement token (HRoot[1,0]) and said first private reference (PA).

14. The first terminal (TA) according to claim 13, wherein said first terminal (TA) is able to communicate with a network operator system (MOB) and wherein said first terminal (TA) comprises a connecting agent adapted to be run by the processor for providing the network operator system (MOB) with a group comprising said first and second identifiers (H[0,1], H[0,2]), said common agreement token (HRoot[1,0]) and said first private reference (PA) to request establishment of the link.
